# EUROPEAN PATENT APPLICATION

(11) **EP 3 339 618 A1**
(43) Date of publication of application: **27.06.2018**
(21) Application number: 16382624.1
(22) Date of filing: 20.12.2016
(51) Int. Cl.: F02G 5/02, F01N 3/02, F16K 11/052, F16K 27/02, F28F 9/007, F28F 27/02, F28D 7/16

(54) **VALVE FOR BUILDING A COMPACT HEAT RECOVERY UNIT**

(71) Applicant: BORGWARNER EMISSIONS SYSTEMS SPAIN, S.L.U., 36315 Vigo Pontevedra (ES)
(72) Inventor: GARCÍA GONZÁLEZ, Salvador, E-36307 Belesar-Baiona-Pontevedra (ES); HERMIDA DOMÍNGUEZ, Xoan Xosé, E-36380 Gondomar- Pontevedra (ES); MARTÍNEZ, Carolina, E-36379 Nigrán- Pontevedra (ES)
(74) Representative: ABG Patentes, S.L.

(57) **Abstract**

The present invention relates to a valve with a chassis configured with a specific shape which allows building a compact heat recovery unit, wherein the valve is the main structure of said recovery unit, and wherein it is the chassis itself that establishes the chambers required for managing the gases in the different operating modes of the recovery unit. This compact configuration prevents the existence of conduits intended for connecting components of the recovery unit, requiring less space in the vehicle engine compartment for the installation thereof.

## Description

### Object of the Invention

The present invention relates to a valve with a chassis configured with a specific shape for building a compact heat recovery unit for internal combustion engines, and to the recovery unit built with said valve.

Heat recovery units have a heat exchanger and a by-pass conduit, the latter being to prevent the passage of hot gas through the heat exchanger in certain circumstances, as well as one or more valves for managing recirculated hot exhaust gases coming from the exhaust conduit.

Each of these elements requires fluid connections connecting two or more elements, taking up space.

The present invention is characterized by a specific configuration of the valve chassis which allows building a compact heat recovery unit, wherein the valve is the main structure of said recovery unit, and wherein it is the chassis itself that establishes the chambers required for managing the gases in the different operating modes of the recovery unit.

This compact configuration prevents the existence of conduits intended for connecting components of the recovery unit, requiring less space in the vehicle engine compartment for the installation thereof.

The present invention has a positive impact on the environment given that in an operating mode, the heat recovery unit built with the valve according to the present invention has the function of recovering some of the energy from the exhaust gases in an internal combustion engine that would otherwise be discharged into the atmosphere.

### Background of the Invention

One of the fields of the art that has been largely developed in internal combustion engines is that of heat recovery in vehicles with internal combustion engines. Hot exhaust gases have a large amount of energy and their recovery results in a greater engine performance when the energy delivered by the engine along the shaft is assessed together with the energy recovered from the hot exhaust gases.

Heat recovery units built in a single device are known, such as the one described in patent application PCT WO/2014/147064, comprising a heat exchanger and a by-pass conduit managed by a valve. The valve has two end positions, a first position closing the by-pass conduit to force the passage of hot gas through the heat exchanger, the heat of the hot gas being transferred to the liquid coolant, and a second position closing the passage from the heat exchanger to the exhaust conduit such that the by-pass conduit is free to prevent or minimize the passage of hot gas through the heat exchanger.

This recovery unit has a coupling or base configured to be attached to the outlet of the diesel particle filter, or DPF. The large diameter of the particle filter allows establishing with the coupling a gas distribution prechamber, allowing said gas to be taken either to the by-pass conduit or to the heat exchanger.

Although this device is very compact, components such as the valve, by-pass conduit, heat exchanger or chambers establishing fluid communication with two or more components, are elements arranged spaced apart from one another and require different parts for their connection.

The present invention establishes a more compact design, establishing a specific configuration of the chassis forming the valve that manages the by-pass conduit and of the heat exchanger, such that it is this chassis that gives rise to the valve closing seats, to the gas distribution chambers and simultaneously serves as a structural element for fixing the heat exchanger.

This specific solution takes up less volume in the engine compartment and reduces the number of components required for building the heat recovery unit.

### Description of the Invention

The present invention relates to a valve made up of a chassis with a configuration which allows building a compact heat recovery unit for internal combustion engines.

Heat recovery units built with the mentioned valve made up of the chassis are also an object of this invention. Said heat recovery units are adapted to either be coupled to the outlet of a gas after-treatment device, such as a particle filter or DPF, or to be coupled to an exhaust conduit.

Going back to the specific configuration of the valve, said valve comprises:
- *a valve flap attached to a flap shaft,*
- *a valve chassis comprising:*
   ∘ *a valve body adapted to house the shaft in a rotating manner,*
   ∘ *an essentially flat first frame comprising a first inner opening and a first seat for the flap on one of the sides of the first frame,*
   ∘ *an essentially flat second frame comprising a second inner opening and a second seat for the flap on one of the sides of the second frame,*
   ∘ *an essentially flat third frame comprising a third inner opening,*
   *wherein:*

- *the first frame and the second frame are attached through the valve body,*
- *the first seat of the first frame and the second seat of the second frame are located on facing sides of their respective frames, wherein the flap allows for two end positions by means of the rotation of its shaft, a first end position for supporting the flap on the first seat, closing the first inner opening, and a second end position for supporting the flap on the second seat, closing the second inner opening,*
- *the third frame laterally emerges from the second frame, from the side of the second frame opposite the side on which the second seat for the flap is located.*

The valve chassis therefore comprises four main elements, the body configured to house the shaft in a rotating manner and the three frames. The first frame and the second frame are attached through the body housing the shaft, whereas the third frame laterally emerges from the second frame.

The first frame and the second frame comprise an opening and a seat, respectively, the seats facing one another. The shaft is housed in the body joining the first frame and the second frame, such that rotation thereof moves the flap angularly between two end positions, a first end position in which the flap is supported on the first seat, thereby closing the opening of the first frame or first opening, and a second end position in which the flap is supported on the second seat, thereby closing the opening of the second frame or second opening.

These elements allow the flap to work as a valve for the first and second openings of the first and second frames, respectively.

The third frame with its corresponding opening, the third opening, laterally emerges from the second frame. This third frame establishes a structural element configured to embrace a heat exchanger once the valve is mounted in a heat recovery device. In the embodiments, the third frame surrounds one of the ends of the heat exchanger through which the hot gas coming from the combustion chambers of an internal combustion engine, at a high or already cooled temperature, respectively, enters or exits.

The first and second frames additionally establish a structural and connecting element at the same time for the different chambers and conduits of a heat recovery unit.

The second frame and the third frame of the valve together form an angle that is comprised in the range of 45° to 135°, whereby the third frame emerges laterally, obliquely or in perpendicular.

In a particular example, the second frame and the third frame of the valve are orthogonal, which allows establishing a chamber between both frames by means of a closure element the support of which in both frames is established in perpendicular directions.

In another particular example, the first frame and the second frame together form an angle of less than 90°, such that a chamber having smaller dimensions can be established between both frames by means of a closure element.

In a particular example, the valve body is a cylindrical body open on the side facing the space located between the first frame and the second frame; in other words, the shaft of the valve is housed in a hole that is not completely surrounded by the cylindrical body, but rather it is one that can be accessed from the space or opening in which the flap rotates.

In a particular example, the first frame and the second frame are attached by means of a strip perpendicular to the main plane of both frames located at one end of the valve body or at both ends thereof. Said perpendicular strip allows reinforcing the connection between both frames.

In a particular example, the valve chassis is formed from punched and stamped sheet, said punched and stamped sheet configuration being usable in any of the examples of devices described below.

When the valve is integrated in a heat recovery unit coupled to the outlet of a gas after-treatment device, the first frame receives one end of a by-pass conduit on the side opposite where the first seat is located, said first frame in turn serving as a seat for a first exhaust manifold. According to one embodiment, this first exhaust manifold is formed by a sheet supported on at least the outer surface of the first frame and of the second frame of the valve.

There is also a second exhaust manifold between the second frame and the third frame. According to the embodiments, the second manifold externally supports on the second and third frames, such that both frames are the structural element of the chamber configured between both frames by means of said second manifold. As will be described below, this second exhaust manifold has a fluid connection which allows the exit of at least some of the gas cooled by the heat exchanger without it going to the exhaust conduit. According to one embodiment, this cooled gas is taken towards an EGR valve managing the flow rate of the EGR gas to be introduced into the intake of the internal combustion engine.

Having established this configuration of the valve, said valve is responsible for receiving both the by-pass conduit and the heat exchanger, acting as a structural element and as a management valve for the exhaust gas in the heat recovery unit; it will also be the structural element of two chambers, both the chamber providing cooled recirculated gas to the EGR (Exhaust Gas Recirculation) system and the chamber allowing the hot gas that follows to the exhaust conduit to exit.

In a preferred embodiment, the valve body is located between the by-pass conduit and the heat exchanger wherein the valve is therefore a structural element of the heat recovery unit, which as it turns out is compact.

The inlets of both the by-pass conduit and the heat exchanger are located at the end opposite the corresponding end thereof which is attached to the valve chassis, the inlet of both components being connected with a fixing manifold adapted to be coupled to a gas after-treatment device. The gases exiting the gas after-treatment device, for example a catalytic converter or a DPF, thereby have the alternative of either entering the heat exchanger or passing through the by-pass conduit, to finally exit through the exhaust conduit or exit through a cooled EGR gas recirculation conduit.

As a third alternative, the gas exiting the after-treatment device can simultaneously pass through the heat exchanger and through the by-pass conduit, for both flows to finally exit through the exhaust conduit and optionally for some of the gas to exit through a cooled EGR gas recirculation conduit.

In the case of the hot gas coming from the engine and passing through the heat exchanger, once it exits the exchange tubes it has two possible paths.

In a first path, the cooled hot gas flows into the second exhaust manifold and from there passes through the second opening of the valve to reach the first exhaust manifold and finally passes through the exhaust conduit of the heat recovery system. This path is established by closing the first opening by means of the flap of the valve.

In a second path, the cooled hot gas flows into the second exhaust manifold and from there passes through the cooled EGR gas recirculation conduit. This path is established by closing the second opening by means of the flap of the valve.

If the flap of the valve is partially closing the second opening, the cooled gas can follow both the described paths simultaneously. The exit of the cooled gas towards the EGR system is managed by an EGR valve. The degree of aperture of the EGR valve as well as the degree of closure of the second opening by means of the flap conditions the amount of cooled gas for each of the paths.

In the case of the hot gas coming from the engine and passing through the by-pass conduit, said gas flows into the first exhaust manifold and then passes through the exhaust conduit of the heat recovery system.

Therefore, once a heat recovery unit is built from a valve according to the first object of the invention, and if it is coupled to the outlet of a gas after-treatment device, the compact heat recovery unit is configured such that it comprises:
- *a valve according to the first object of the invention.*

The valve has a chassis like the one described, fulfilling a structural function with a configuration minimizing the weight of the heat recovery unit and considerably reducing the volume it takes up.

According to a first embodiment, the heat recovery device further comprises:
- *a fixing manifold adapted to be coupled to a gas after-treatment device located on one side of said fixing manifold, and on the opposite side said fixing manifold comprises a first seat adapted to receive the end of the body of a heat exchanger and a second seat to allow for a by-pass conduit.*

The fixing manifold is a part serving as a base to establish the fixing to the gas after-treatment device, and it further acts as an intake manifold for the exhaust gas towards the heat recovery unit. The gases exiting the gas after-treatment device are collected by this fixing manifold and taken towards the heat exchanger, towards the by-pass conduit, or towards both to thereby simultaneously pass through both.

The fixing manifold has two seats, one for the by-pass conduit and the other one for the heat exchanger, it being understood that in addition to securing the attachment, these seats are configured in an opening that puts the interior of the fixing manifold and the element attached to the corresponding seat, the by-pass conduit or the heat exchanger, in fluid communication.
- *a heat exchanger comprising a shell housing a heat exchange tube bundle extending between an inlet for the hot gas and an outlet for the cooled gas, further comprising an inlet and an outlet for circulation of the liquid coolant through the interior of the shell, covering the exchange tube bundle, wherein one end of the heat exchanger is attached to the first seat of the fixing manifold, and the opposite end is attached to the third frame of the valve chassis such that the tube bundle puts the interior of the fixing manifold in fluid communication with the third opening of the chassis.*

The heat exchanger is the device responsible for transferring heat from the hot gas which comes from the after-treatment device, and which in turn comes from the combustion chambers of the internal combustion engine, to the liquid coolant.

The heat exchanger has an inlet and an outlet for circulation of the liquid coolant. The main body of the heat exchanger shows two ends, one end being attached to the fixing manifold for receiving the hot gas and the opposite end being fixed to the third frame of the valve chassis. The cooled gas exits through this opposite end.

Among possible heat exchanger configurations, exchangers with a tube bundle formed by flat tubes located between two baffles will be used in the examples that will be described below. Nevertheless, there are other examples in which the tube bundle is configured by means of stacked flat tubes enlarged at their ends to maximally reduce the decrease in section resulting from entering the tube bundle, and at the same time leaving liquid coolant passage channels in the spaces between tubes.

For this type of heat exchanger taken as an example, the third frame of the valve chassis embraces around the perimeter of the end of said heat exchanger through which the cooled gas exits, being adapted to the section of the outlet end for said cooled gas, said section being rectangular, square, or also round in one embodiment.
- *a by-pass conduit extending from the second seat of the fixing manifold to the first frame of the valve chassis such that said by-pass conduit puts the interior of the fixing mani fold in fluid communication with the first opening of the valve chassis.*

The flow of the hot gas coming from the after-treatment device has a first possible path, passing through the described heat exchanger to reduce its temperature and to transfer its thermal energy to the liquid coolant, and a second possible path that prevents passing through the heat exchanger. The gas flow can follow said first and second paths simultaneously, part of the flow going through the heat exchanger while the other part of the gas flow is taken into the atmosphere.

This second possible path is through the by-pass conduit extending from the fixing manifold to the first opening of the valve chassis, in particular according to one embodiment, by means of a conduit fixed to the first frame of the chassis.

Given that the first frame of the chassis is attached to one end of the by-pass conduit and the third frame of the chassis is attached to one end of the heat exchanger, the chassis forms a structural element for both elements which are in turn attached at their opposite ends through the same component: the fixing manifold.

This structural function of the valve chassis does not downgrade its function as a valve because the flap has seats for the support thereof at its two end positions: the first seat allows supporting the flap, causing the path for the exhaust gas towards the by-pass conduit to be closed, and the second seat allows supporting the flap, causing the path for the exhaust gas towards the heat exchanger to be closed.

In preferred examples, the by-pass conduit is attached through its outer wall to the inner wall of the first opening of the first frame of the valve chassis.
- *a first exhaust manifold adapted to close the space established between the first frame and the second frame, forming a chamber, and allowing the flap to move in the interior thereof, and comprising an outlet connection for fluid communication of the interior of the first exhaust manifold with an exhaust conduit,*
- *a second exhaust mani fold adapted to close the space established between the second frame and the third frame, forming a chamber, and comprising an outlet connection for fluid communication of the interior of the second exhaust manifold with a gas feed conduit for feeding recirculated gas to the intake.*

In a preferred example, the first manifold, the second manifold or both are formed from a punched and pressed sheet.

In a preferred example, the first manifold, the second manifold or both are formed as a single part, in this case the part being supported on the periphery of the second frame dividing the inner space into two chambers.

Any of the preceding embodiments involves a simpler and more cost-effective process for manufacturing both exhaust manifolds.

The first frame, the second frame and the third frame form two chambers, a first chamber located between the first frame and the second frame, and a second chamber located between the second frame and the third frame, said chambers corresponding to each of the first and second exhaust manifolds.

The first chamber, first chamber being understood as the space established between the first frame and the second frame housed in the first exhaust manifold, or chamber of the first exhaust manifold, is in fluid communication with the exhaust conduit.

Therefore, when the valve allows the hot gas to exit in one of its end positions through the by-pass conduit, the hot gas exits into the atmosphere without transferring its heat to the liquid coolant and without having access to the intake of the combustion engine either.

In a preferred example, the first frame of the valve is oblique with respect to the transverse plane of the by-pass conduit. The support of said by-pass conduit on the first frame is therefore oblique, as opposed to the support of the heat exchanger on the third frame which is perpendicular. This oblique position of the first frame reduces the angle of rotation required for the flap to rotate between its two end positions.

The second chamber, second chamber being understood as the space established between the second frame and the third frame housed in the second exhaust manifold, or chamber of the second exhaust manifold, is in fluid communication with the cooled gas feed conduit reaching the intake of the combustion engine. The gas cooled by the heat exchanger can exit this chamber according to two alternatives, that is, either through this fluid communication with the feed conduit, reaching the intake, or through the second opening of the valve towards the exhaust conduit. The exit for this cooled gas from the chamber can simultaneously combine both paths.

The first chamber has a mainly angular configuration because it houses the flap of the valve, provided with angular rotation. The second chamber can have a freer configuration, although the configuration based on a third frame laterally emerging from the second frame also results in a quasi-angular configuration.

The cooled gas going towards the intake is a gas with a lower concentration of oxygen and is used as EGR gas in the EGR system of the vehicle. The recirculated EGR gas flow rate depends on the degree of aperture of the EGR valve, said valve being part of the EGR system and not necessarily integrated in the heat recovery device. In this configuration, the heat recovery device uses the heat exchanger to reduce recirculated EGR gas temperature.

If the flap of the heat recovery device is arranged such that the second opening is open and the by-pass conduit is closed, then the cooled gas is led towards the exhaust conduit. This is the configuration in which the heat recovery unit transfers heat from the hot gas to the liquid coolant for heat recovery. In this configuration, it is also possible for the gas to partially be taken towards the intake as EGR gas.

Although the valve does have two end positions, it can also adopt intermediate positions to regulate flow through the first opening and the second opening of the valve.

In one embodiment, the valve body is located between the by-pass conduit and the heat exchanger.

In one embodiment, the by-pass conduit and the heat exchanger are arranged essentially parallel to one another, meaning that the sum of angles formed by the first and second chambers, and therefore between the first and third frames, is essentially 180°, essentially being understood as the variations of the angle around 180° of less than 5°.

In one embodiment, the by-pass conduit and the heat exchanger are arranged with an orientation converging towards the valve, meaning that the sum of angles formed by the first and second chambers is less than 180°.

In one embodiment, the fixing manifold comprises a fixing base adapted to being coupled to the gas after-treatment device, said base being configured on a main plane, and in which the by-pass conduit and the heat exchanger are in an oblique position with respect to the base of the fixing manifold.

Advantageously, this allows the heat recovery unit to be more compact, such that it is capable of being adapted to the space available in the combustion engine.

When the valve according to the first object of the invention is integrated in a compact heat recovery unit coupled to an exhaust conduit, according to a second preferred example of the invention, the heat recovery unit built from said valve also has a chassis like the one already described given that the valve chassis is integrated in the heat recovery unit.

Additionally, the heat recovery unit comprises:
- *a first intake manifold adapted to close the space established between the first frame and the second frame, forming a chamber, and allowing the flap to move in the interior thereof, comprising an inlet for the hot gas.*

The first frame and the second frame of the valve chassis form a first chamber, said first chamber being the space housed between said first and second frames inside the first intake manifold. The first chamber is in fluid communication with the exhaust conduit through the first opening of the first frame of the valve chassis. According to one embodiment, this first intake manifold is formed by a sheet supported on at least the outer surface of the first frame and of the second frame of the valve.

This first intake manifold has an inlet for the hot gas coming from the internal combustion engine.

In a particular example, the first manifold is attached along the periphery of the first frame and is attached along the periphery of the second frame in order to establish the first chamber.

Likewise, the heat recovery unit comprises:
- *a second intake manifold adapted to close the space established between the second frame and the third frame, forming a chamber.*

The second frame and the third frame of the valve chassis delimit a second chamber, said second chamber being the space housed between said second and third frames inside the second intake manifold. According to the embodiments, the second manifold externally supports the second and third frames, said second manifold being attached along the periphery of the second and third frames, such that both frames are the structural element of the chamber configured between both frames by means of said second manifold.

Furthermore, the heat recovery unit also comprises:
- *an exhaust conduit adapted to lead exhaust gas into the atmosphere, attached to the first frame and in fluid communication with the chamber formed by the first intake manifold.*

The first frame of the valve chassis receives one end of said exhaust conduit, whereas the end opposite of the exhaust conduit opens into the atmosphere.

In a particular example, the inlet for the hot gas of the first intake manifold is established through a conduit segment which in this embodiment is aligned with the exhaust conduit of the device, such that said first intake manifold is interposed between segments of the exhaust conduit of the combustion engine.

The hot gas flow coming from the combustion engine has a first possible path, the passage from the first intake manifold through the first opening of the first frame to the exhaust conduit, flowing out into the atmosphere.

According to this second preferred example, the heat recovery unit also comprises:
- *a heat exchanger comprising a shell housing a heat exchange tube bundle extending between an inlet for the hot gas and an outlet for the cooled gas, further comprising an inlet and an outlet for circulation of the liquid coolant through the interior of the shell, covering the exchange tube bundle, wherein one end of the heat exchanger is attached to the third frame of the valve chassis, and the opposite end is attached to an exhaust manifold which is in turn in fluid communication with the exhaust conduit, such that the tube bundle puts the chamber formed by the second intake manifold and the exhaust manifold for leading the cooled gas to the exhaust conduit in fluid communication.*

The heat exchanger is the device responsible for transferring heat from the hot gas coming from the combustion chambers of the internal combustion engine to the liquid coolant circulating through the heat exchanger.

The heat exchanger has an inlet and an outlet for circulation of said liquid coolant. The main body of the heat exchanger shows two ends, one end being attached to the third frame of the valve, and through the third opening thereof to the second intake manifold for receiving hot gas, and the opposite end being fixed to the exhaust manifold. The cooled gas exits through this opposite end.

The exhaust manifold is a chamber configured between the outlet of the heat exchanger and the exhaust conduit, which receives the cooled gas exiting the heat exchanger and leads it to the exhaust conduit which in turn allows the exit of said cooled gas into the atmosphere.

As in the examples described below, among possible heat exchanger configurations there are exchangers with a tube bundle formed by flat tubes located between two baffles. Nevertheless, there are other examples in which the tube bundle is configured by means of stacked flat tubes enlarged at their ends to maximally reduce the decrease in section resulting from entering the tube bundle, and at the same time leaving liquid coolant passage channels in the spaces between tubes.

According to one embodiment, a heat exchanger thus configured has a mainly rectangular section. For this type of heat exchanger taken as an example, the third frame of the valve chassis embraces around the perimeter of the end of the corresponding heat exchanger, in this case the inlet end for the exhaust gas coming from the engine, thereby adopting an also rectangular shape.

The second intake manifold formed between the second frame and the third frame of the valve is in fluid communication with the heat exchanger at the end where entry of the hot gas from the combustion engine takes place.

Therefore, the hot gas flow coming from the combustion engine has a second possible path, first travelling through the first chamber, formed by the first intake manifold, to then access the second intake manifold through the second opening of the valve. From said second intake manifold, the hot gas accesses the tubes of the heat exchanger, passing through them to reach the exhaust manifold, and from there accessing the exhaust conduit and therefore into the atmosphere through said exhaust conduit. This second path is forced through a position of the flap closing the first seat of the first frame, preventing the passage through the exhaust conduit and obliging the hot gas to transfer its thermal energy to the liquid coolant of the heat exchanger.

In a particular example, the first chamber, corresponding to the first intake manifold, has a mainly angular configuration because it houses the flap of the valve, provided with angular rotation. The second chamber can have a freer configuration, although the configuration based on a third frame laterally emerging from the second frame also results in a quasi-angular configuration.

In this case, given that the valve is located on the side of the inlet of the hot exhaust gas, being configured at an angle of less than 90° allows a smaller maximum angle of rotation for the flap.

Therefore, the valve is responsible for receiving both the exhaust conduit and the heat exchanger, acting as a structural element, as well as acting as a management valve for the exhaust gas in the heat recovery unit. It will also be the structural element of two chambers, both the chamber providing hot gas to the heat exchanger of the system and the chamber receiving the entry of the hot gas coming from the internal combustion engine.

The inlets of both the exhaust conduit and the heat exchanger are located at the end which is attached to the valve chassis.

Additionally, the structural function of the valve chassis does not undermine its function as a valve because the flap has seats for the support thereof in closing for its two end positions: the first seat allows supporting the flap, causing the path of the hot gas towards the exhaust conduit, and therefore towards the atmosphere to be closed, and the second seat allows supporting the flap, causing the path of the hot gas towards the heat exchanger to be closed.

Although the valve does have two end positions, it can also adopt intermediate positions to regulate flow through the first opening and the second opening of the valve.

Therefore, when the valve allows the hot gas to exit in one of its end positions through the by-pass conduit, the hot gas exits into the atmosphere without transferring its heat to the liquid coolant, i.e., without having passed through the interior of the tubes of the heat exchanger.

In this case, the device can work the same way but in reverse direction, the first intake manifold and the second intake manifold therefore now being a first exhaust manifold and a second exhaust manifold, respectively, and the exhaust manifold being an intake manifold. Coupling and fixing with the different mentioned components are done in a similar manner.

In a particular embodiment, the inlet of the first intake manifold comprises a conduit segment which, according to the preferred configuration, axially coincides with the exhaust conduit, or at least their axes are parallel, such that the first exhaust manifold is an intermediate part between the conduit segment for accessing the chamber of the first manifold and the exhaust conduit.

In a particular embodiment, the exhaust manifold comprises a tubular prolongation attached to the wall of the exhaust conduit, through which the cooled gas is taken towards the exhaust conduit and therefore towards the atmosphere.

In a particular embodiment, the first frame of the valve is oblique with respect to the transverse plane of the exhaust conduit.

A third inventive aspect comprises an internal combustion engine in turn comprising a heat recovery unit according to any of the particular examples described for the second inventive aspect of the invention.

### Description of the Drawings

These and other features and advantages of the invention will be shown more clearly based on the following detailed description of a preferred embodiment, given solely by way of illustrative and non-limiting example in reference to the attached drawings.
Figure 1 shows the valve chassis according to one embodiment of the invention.
Figure 2 shows a top view of the same chassis shown in the preceding figure.
Figure 3 shows a section according to a plane parallel to the top view of the same chassis of the preceding figures.
Figure 4 shows a section of an example of a heat recovery unit using a valve with a chassis like the one shown in the preceding figures. The section is according to a plane perpendicular to the shaft of the flap of the valve.
Figure 5 shows the same section of the preceding figure with an inclination which allows seeing certain details in perspective, such as the outlet of the exchanger.
Figure 6 shows a perspective view of the same device as the one shown in the preceding view without being sectioned.
Figure 7 shows a section of a second example of a heat recovery unit using a valve with a chassis like the shown in Figures 1 to 3. The section is according to a plane perpendicular to the heat exchanger, with respect to which internal details can be seen.
Figure 8 shows another section of the second example of a heat recovery unit of the preceding figure, having a different device orientation which allows seeing internal details of the complete device configuration.

### Detailed Description of the Invention

According to the first inventive aspect, the present invention relates to a valve formed from a chassis with a specific configuration which allows building a very compact and lightweight heat recovery unit with a very small number of parts.

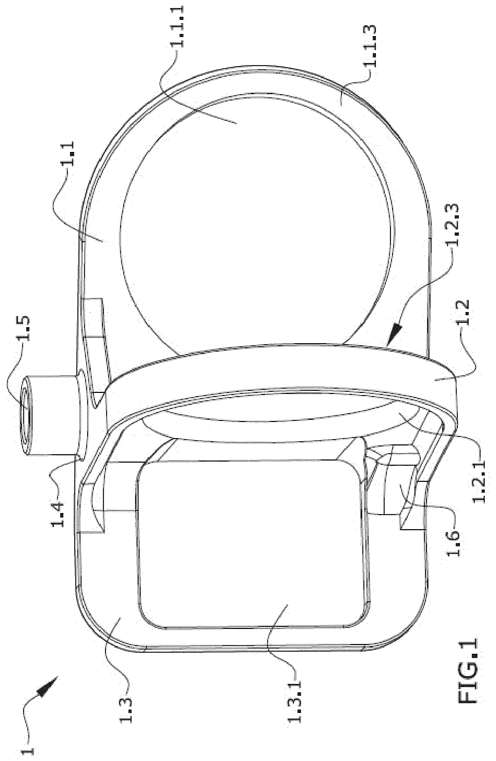

Figure 1 shows a valve chassis (1) of the valve (11) for building a compact heat recovery unit, said chassis (1) being formed as a single part in this embodiment, made up of three frames (1.1, 1.2, 1.3). In this embodiment, each of the frames is contained in a different plane.

A first frame (1.1) and a second frame (1.2) are attached to a common body (1.4) configured to house the shaft (3) of the valve (11), rotation of said shaft (3) being allowed. The planes associated with the first frame (1.1) and the second frame (1.2) intersect in a line parallel to the shaft (3) of the flap (2) of the valve (11) and close to the geometric axis of said shaft (3) of the flap (2).

According to this embodiment, the configuration of the body (1.4) is cylindrical, with an opening towards the space defined between the first frame (1.1) and the second frame (1.2) such that the flap (2) attached to the shaft (3) allows for angular rotation between both frames (1.1, 1.2), wherein the support between said frames (1.1, 1.2) and the body (1.4) define the two possible end positions of rotation of the flap (2).

The first frame (1.1) has a first opening (1.1.1) and a first seat (1.1.2) along the perimeter around this first opening (1.1.1). The second frame (1.2) has a second opening (1.2.1) and a second seat (1.2.2) along the perimeter around this second opening (1.2.1). The first seat (1.1.2) and the second seat (1.2.2) are facing one another.

The shaft (3) is housed in the body (1.4) in a rotational manner such that the flap (2) attached to said shaft (3) allows for angular movement between two end positions, a first end position being supported on the first seat (1.1.2), closing the first opening (1.1.1), and a second end position being supported on the second seat (1.2.2) and closing the second opening (1.2.1). Nevertheless, in this embodiment the flap (2) allows for intermediate positions determining degrees of partial aperture in the first opening (1.1.1) and in the second opening (1.2.1).

The shaft (3) is housed in a cylindrical cavity or housing (1.5) open towards the space located between the first frame (1.1) and the second frame (1.2), allowing the flap (2) cojoint with the shaft (3) to project towards said space. The cylindrical configuration of the shaft (3) and of the cylindrical housing (1.5) establishes a link allowing rotation of the shaft (3).

Rotational movement of the shaft (3) is assured by means of a lower bearing and an upper bushing (not shown in the drawings). The bearing is housed in a bearing housing (not shown) assuring that the shaft (3) presents only rotational movement.

According to this embodiment, the first frame (1.1) and the second frame (1.2) have circular openings (1.1.1, 1.2.1) and the outer configuration thereof shows a circular closure surface (1.1.3, 1.2.3) except for the attachment to the main body (1.4) which establishes a transition into a flat band to reach the ends of the body (1.4).

According to this embodiment, the chassis (1) has a third frame (1.3) with a third opening (1.3.1) intended for housing the end of a heat exchanger (5) for heat recovery. The third frame (1.3) has a rectangular configuration in order to adapt to the rectangular section of the heat exchanger (5) housed in the third opening (1.3.1). The valve (11) itself is, therefore, the structural support of the heat exchanger (5), among others.

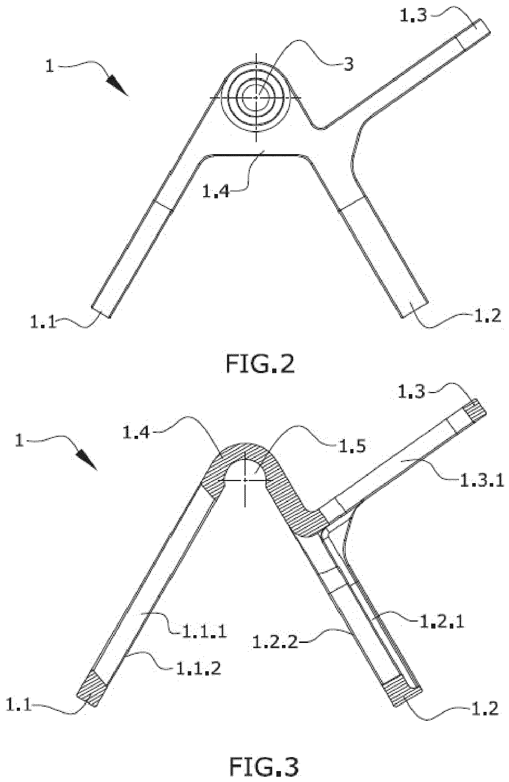

As can be seen in the top view depicted in Figure 2, the third frame (1.3) laterally emerges from the second frame (1.2) from the side of the second frame (1.2) opposite the side on which the second seat (1.2.2) for the flap (2) is located. In this embodiment, the attachment of the third frame (1.3) with the remaining elements of the chassis (1) is established in the second frame (1.2) close to the attachment of this second frame (1.2) to the body (1.4) of the valve (11). Nevertheless, the attachment can be established in positions close to the body (1.4) or even in the body (1.4) itself, at all times being on the side of the second frame (1.2) opposite the side on which the second seat (1.2.2) is located.

The section depicted in Figure 3 shows the arrangement of the three frames (1.1, 1.2 and 1.3) of the valve (11) in relation to others, as well as the openings (1.1.1, 1.2.1 and 1.3.1) established in each of the frames. Both the cylindrical body (1.4) of the valve (11) and the cylindrical housing (1.5) of the shaft (3) of said valve (11) are likewise seen.

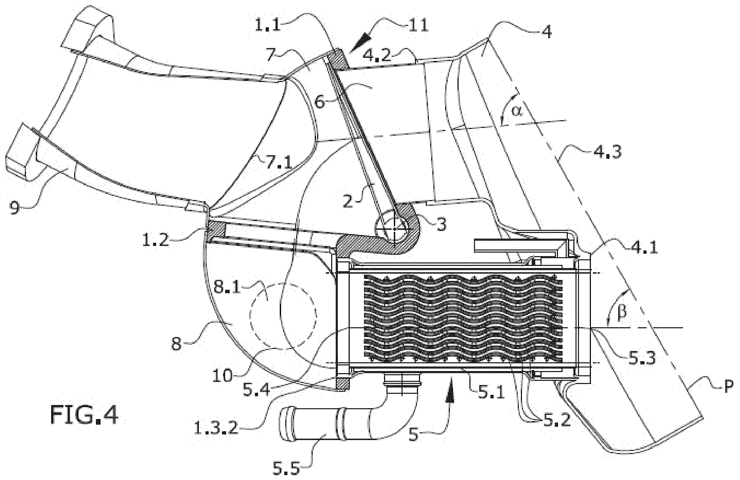

Figures 4 to 6 show a first embodiment of a compact heat recovery unit built from a valve (11) like the one described. In this case, the heat recovery unit is coupled to the outlet of a gas after-treatment device (not shown in the drawings).

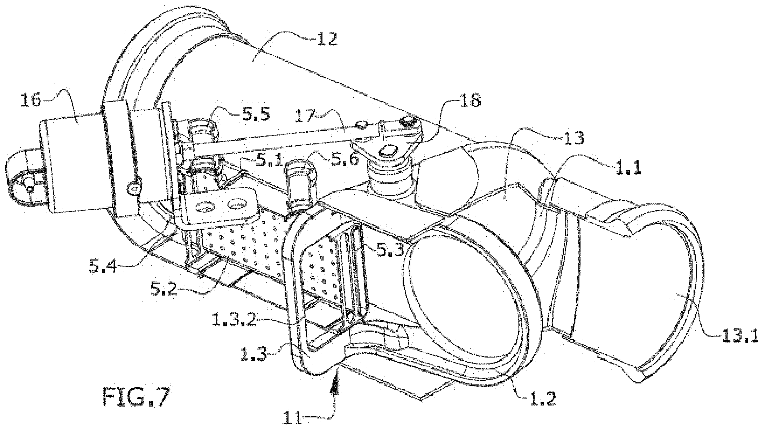

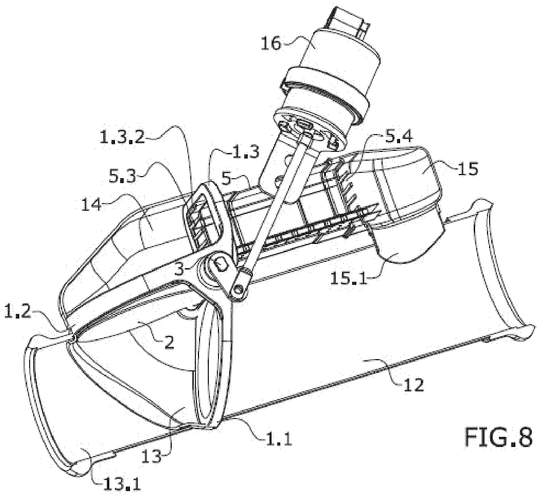

Figures 7 and 8 show a second embodiment of a compact heat recovery unit built from a valve (11) like the one described. In this case, the heat recovery unit is coupled to an exhaust conduit.

In relation to the mentioned configuration of the valve (11), Figures 4-6 as well as Figures 7-8 show how the third frame (1.3) has a closure surface (1.3.2) in accordance with a perimetral flat band having continuity with the closure surface (1.1.3, 1.2.3) in the form of a flat band of the first frame (1.1) and of the second frame (1.2). These closure surfaces in the first embodiment (Figures 4-6) serve as a support for two manifolds, a first exhaust manifold (7) configured to close the space established between the first frame (1.1) and the second frame (1.2), allowing the flap (2) to move in the interior thereof, and a second exhaust manifold (8) configured to close the space established between the second frame (1.2) and the third frame (1.3). In this embodiment, both manifolds (7, 8) are formed from punched and stamped sheet. In a second embodiment, as will be described below (Figures 7 and 8), these closure surfaces serve as support for a first intake manifold (13) and a second intake manifold (14); the first intake manifold (13) is configured to close the space established between the first frame (1.1) and the second frame (1.2), allowing the flap (2) to move in the interior thereof, said interior being a first chamber, and the second intake manifold (14) is configured to close the space established between the second frame (1.2) and the third frame (1.3). Both intake manifolds (13, 14) in this second embodiment are formed from punched and stamped sheet.

There is a flat, triangular-shaped reinforcement (1.6) between the first frame (1.1) and the second frame (1.2) that is configured such that it establishes continuity of the closure surfaces (1.1.3, 1.2.3, 1.3.2). Said reinforcement (1.6) can be seen in Figure 1.

Figures 4-8 show how the sheet is supported on the closure surfaces (1.1.3, 1.2.3, 1.3.2), and particularly how the support surface (1.2.3) of the second frame (1.2) serves as a support for both manifolds configured in separate parts, said manifolds (7, 8) and (13, 14) being in the first and second embodiments, respectively.

According to another embodiment, both the first manifold (7) and the second manifold (8) are manufactured in a single part and the attachment on the closure surface (1.2.3) of the second frame (1.2) establishes the separation between the space located between the first frame (1.1) and the second frame (1.2), and the space located between the second frame (1.2) and the third frame (1.3). This occurs in a similar manner for the case of the intake manifolds (13, 14) of the second example.

As shown in Figures 4 to 6, corresponding to an embodiment of a heat recovery unit involving the use of a gas after-treatment device, the following components are described.

The first exhaust manifold (7) of the recovery unit comprises an outlet connection (7.1) in order to establish a fluid communication between the interior of the space it houses and an exhaust conduit (9) to discharge the exhaust gases into the atmosphere.

The second exhaust manifold (8) comprises an outlet connection (8.1) in order to establish a fluid communication between the interior of the space it houses and a recirculated gas feed conduit (10) reaching the intake of the internal combustion engine. This gas feed conduit (10) is only indicated with a discontinuous line in Figure 4 and it is where the cooled recirculated gas exits to be used as EGR gas in feeding the engine, wherein the flow rate of this EGR gas is determined by an EGR valve not shown in the drawings.

As described above, the third frame (1.3) is the structural element of the chassis (1) which allows fixing the end of the exchanger (5). The exchanger (5) according to this embodiment is configured like a shell (5.1) mainly formed by two stamped U-shaped sheets of metal attached to one another, giving rise to a prismatic body with a rectangular section. A tube bundle (5.2) extending between the two ends of the shell (5.1) is housed in the interior thereof. In the embodiment shown in Figures 4, 5 and 6, the tube bundle (5.2) is a bundle formed by flat tubes held by two end baffles. Another alternative configuration according to another embodiment has a tube bundle (5.2) comprising flat tubes enlarged at their ends, maximizing the entry area into the tubes of the tube bundle (5.2).

In any case, the tube bundle (5.2) comprises channels between the tubes for the passage of the liquid coolant. The liquid coolant enters through a liquid coolant inlet (5.5) located in the lower portion when the device is operatively installed, and a liquid coolant outlet (5.6) located in the upper portion. Therefore, if bubbles are generated because the liquid coolant reaches its boiling point, the bubbles can be readily discharged reducing thermal fatigue of the heat exchanger (5).

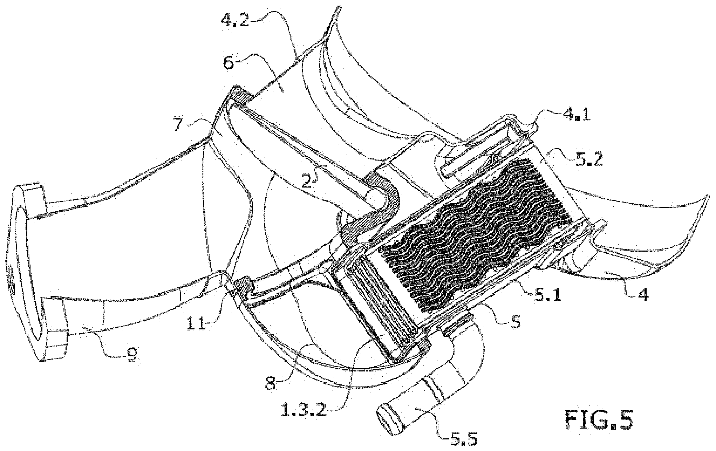

Figures 4 and 5 show a sectional view of the main components of the heat recovery unit, particularly of the heat exchanger (5), in which the hot gas inlet (5.3) is located at one end, and the cooled gas outlet (5.4) for the exit of cooled gas after it passes through the interior of the tube bundle (5.2), reaches the chamber located in the interior defined by the second manifold (8).

The cooled gas reaching this chamber located in the interior defined by the second manifold (8) has two possible paths, one exiting through the outlet connection (8.1) of the second manifold (8) to feed the EGR system with recirculated and cooled gas, and the other passing through the second opening (1.2.1) of the second frame (1.2) when the flap (2) does not close the second opening (1.2.1).

The first path allows feeding EGR gas into the internal combustion engine. The second path allows discharging the cooled gas into the atmosphere. This second path allows maintaining a gas flow to be cooled through the heat exchanger (5), even though there is no consumption of EGR gas transferring heat to the liquid coolant. This configuration allows heat recovery using the heat exchanger (5).

The hot gas comes from a gas after-treatment device, for example a DPF. The heat recovery unit has a fixing manifold (4) that is configured to be coupled to the outlet of the gas after-treatment device. All the hot gases are thereby led back through this fixing manifold (4). The fixing manifold (4) according to the embodiments is formed by one or more parts of punched and stamped sheet.

According to the embodiments shown in Figures 4 to 6, the coupling of the fixing manifold (4) with the gas after-treatment device is established through a base (4.3) configured to surround the outlet of said after-treatment device.

The after-treatment device has a cylindrical configuration with an outlet base defining a plane P. This plane P is the main plane of the base (4.3) shown in profile in Figure 4 according to a discontinuous line.

The base (4.3) of the fixing manifold (4) establishes the water-tight seal on the outlet of the after-treatment device such that the gases are led to two possible openings located on the opposite side of the fixing manifold (4).

The first opening has a first seat (4.1) on which the end of the heat exchanger (5) sits, where the hot gas enters, the inlet end (5.3) opposite the outlet end (5.4) attached to the third frame (1.3), and the second opening has a second seat (4.2) on which a by-pass conduit (6) sits to lead the hot gas directly to the first opening (1.1.1) of the first frame (1.1) when the flap (2) of the valve allows the passage thereof.

According to the configuration shown in this embodiment, both the by-pass conduit (6) and the heat exchanger (5) are fixed at one end through the valve chassis (1) and at the opposite end through the fixing manifold (4). The fact that they are attached at each end through the structural part itself establishes a very high degree of stiffness using a small number of parts, which lessens manufacturing costs.

In this embodiment, the by-pass conduit (6) is attached to the chassis (1) by insertion of said by-pass conduit (6) in the inner wall of the first opening (1.1.1).

According to another more compact embodiment, the second seat (4.2) is configured as a tubular projection that is directly attached to the perimetral area of the first opening (1.1.1), whereby it is this tubular projection which is identified as the by-pass conduit (6), reducing the number of parts required for manufacturing the heat recovery unit.

Figure 4 shows with a discontinuous line the geometric axis of the by-pass conduit (6) as well as the angle (α≠90°) with the main plane P of the base (4.3) of the fixing manifold (4). These same figures also show with a discontinuous line the geometric axis of the heat exchanger (5) as well as the angle (β≠90°) with the main plane P of the base (4.3) of the fixing manifold (4). As shown in the two figures, the inclination of both axes is slightly different, forcing the by-pass conduit (6) and the heat exchanger (5) to have an orientation slightly converging towards the chassis (1).

The inclination of both elements with respect to the direction normal to the main plane (P) allows adapting the heat recovery unit to engine compartment space requirements.

In this embodiment, the body (1.4) of the chassis (1) configured to house the shaft (3) of the flap (2) is located between the heat exchanger (5) and the by-pass conduit (6) to reduce space requirements.

In the embodiment shown in a sectional view in these same Figures 4 and 5, it can be seen that the first seat (4.1) of the fixing manifold (4) has an offset region to house a conduit which allows the bubbles generated in the liquid coolant, for example if said liquid coolant reaches its boiling temperature, to exit.

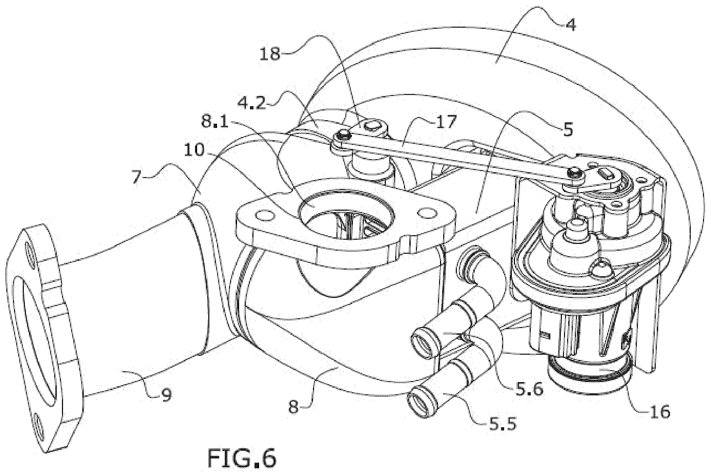

Figure 6 shows a perspective view of the heat recovery unit in which the shaft (3) is attached to a connecting rod (18) actuated through an arm (17) moved by an actuator (16). In this embodiment, the support of the actuator (16) is fixed to the shell (5.1) of the heat exchanger (5). The liquid coolant outlet (5.6) of the heat exchanger (5), which allows the connection with the liquid coolant conduits in the space left between the heat exchanger (5) and the by-pass conduit (6), can also be seen.

As shown in Figures 7 and 8, corresponding to a second embodiment of a heat recovery unit located in the exhaust conduit, the following components are described.

The first intake manifold (13) comprises an access through which the hot gas coming from the internal combustion engine accesses the heat recovery unit.

In the particular example shown in Figures 7 and 8, the first intake manifold (13) comprises a conduit segment (13.1) acting as said access for the hot gas into the interior of the first intake manifold (13) so it can later be led towards either of the two possible paths established by the recovery unit. Therefore, from the first intake manifold (13) the hot gas can access the exhaust conduit (12) through the first opening (1.1.1) or the second intake manifold (14) through the second opening (1.2.1).

Therefore, access of the hot gas into the second intake manifold (14) is through the second opening (1.2.1) of the valve (11), whereas it exit from said second intake manifold (14) takes place through the third opening (1.3.1), the hot gas having access to the heat exchanger (5).

In this particular example, all that is allowed is for the hot gas to exit the combustion engine directly into the atmosphere, or for it to exit once said hot gas has been cooled in the heat exchanger (5).

In this particular embodiment, the third frame (1.3) of the valve (11) is a structural element of the chassis (1) which allows fixing the end of the exchanger (5). The exchanger (5) according to this embodiment is configured like a shell (5.1) mainly formed by two stamped U-shaped sheets of metal attached to one another, giving rise to a prismatic body with a rectangular section. A tube bundle (5.2) extending between the two ends of the shell (5.1) is housed in the interior thereof.

As shown in Figures 7 and 8, the tube bundle (5.2) is a bundle formed by flat tubes held by two end baffles. Another alternative configuration according to another embodiment has a tube bundle (5.2) comprising flat tubes enlarged at their ends, maximizing the entry area into the tubes of the tube bundle (5.2).

In any case, the tube bundle (5.2) comprises channels between the tubes comprised in the bundle (5.2) for the passage of liquid coolant. The liquid coolant enters through a liquid coolant inlet (5.5) located in the upper portion when the device is operatively installed, and a liquid coolant outlet (5.6) also located in the upper portion. Therefore, if bubbles are generated because the liquid coolant reaches its boiling point, the bubbles can be readily discharged reducing thermal fatigue of the heat exchanger (5).

Therefore, Figures 7 and 8 show a sectional view of the main components of the heat recovery unit, particularly of the mentioned heat exchanger (5), in which the hot gas inlet (5.3) is located at one end, and the cooled gas outlet (5.4) for the exit of cooled gas after it passes through the interior of the tube bundle (5.2) reaches the chamber located in the interior defined by the exhaust manifold (15).

The cooled gas reaching this chamber located in the interior defined by the exhaust manifold (15) reaches the atmosphere when it passes from said exhaust manifold (15) to the exhaust conduit (12), through the tubular prolongation (15.1).

These figures also show how the shaft (3) is attached to a connecting rod (18) actuated through an arm (17) moved by an actuator (16). In this embodiment, the support of the actuator (16) is fixed to the shell (5.1) of the heat exchanger (5).

In this particular example, the body (1.4) of the chassis (1) configured to house the shaft (3) of the flap (2) is located between the heat exchanger (5) and the exhaust conduit (12) to reduce space requirements.

According to one embodiment, the chassis (1) of the valve (11) is formed from stamped and punched sheet, giving rise to a very low-cost manufacture.

According to another embodiment, said chassis (1) of the valve (11) is configured by means of a microfusion process, this other option for manufacturing the valve chassis also being applicable to all the examples of devices described above.

According to one embodiment, the first frame (1.1), the second frame (1.2) and the third frame (1.3) are portions of punched sheet attached to one another. The first frame (1.1) and the second frame (1.2) are attached by means of the body (1.4) which is configured before the final configuration as a separate part, and the third frame (1.3) is attached to the second frame (1.2).

According to another embodiment, the first frame (1.1) and the second frame (1.2) come from the same part made up of punched and stamped sheet, in which the body (1.4) is obtained by a pressing and bending operation. The third frame (1.3) is then attached to the second frame (1.2).

According to another embodiment, the chassis (1) is a one-piece injected part.

## Claims

1. A valve (11) for building a compact heat recovery unit for internal combustion engines with an EGR system comprising:
- a valve flap (2) attached to a flap shaft (3),
- a valve chassis (1) comprising:
o a valve body (1.4) adapted to house the shaft (3) in a rotating manner,
o an essentially flat first frame (1.1) comprising a first inner opening (1.1.1) and a first seat (1.1.2) for the flap (2) on one of the sides of the first frame (1.1),
o an essentially flat second frame (1.2) comprising a second inner opening (1.2.1) and a second seat (1.2.2) for the flap (2) on one of the sides of the second frame (1.2),
o an essentially flat third frame (1.3) comprising a third inner opening (1.3.1),
wherein:
- the first frame (1.1) and the second frame (1.2) are attached through the valve body (1.4),
- the first seat (1.1.2) of the first frame (1.1) and the second seat (1.2.2) of the second frame (1.2) are located on facing sides of their respective frames (1.1, 1.2), wherein the flap (2) allows for two end positions by means of the rotation of its shaft (3), a first end position for supporting the flap (2) on the first seat (1.1.2), closing the first inner opening (1.1.1), and a second end position for supporting the flap (2) on the second seat (1.2.2), closing the second inner opening (1.2.1),
- the third frame (1.3) laterally emerges from the second frame (1.2), from the side of the second frame (1.2) opposite the side on which the second seat (1.2.2) for the flap (2) is located.

2. The valve (11) according to claim 1, wherein the second frame (1.2) and the third frame (1.3) are orthogonal.

3. The valve (11) according to any of the preceding claims, wherein the first frame (1.1) and the second frame (1.2) together form an angle of less than 90°.

4. The valve according to any of the preceding claims, wherein the valve body (1.4) of the valve (11) is a cylindrical body open on the side facing the space located between the first frame (1.1) and the second frame (1.2).

5. The valve according to any of the preceding claims, wherein the first frame (1.1) and the second frame (1.2) are attached by means of a strip perpendicular to the main plane of both frames (1.1, 1.2) located at one end of the valve body (1.4) of the valve (11) or at both ends thereof.

6. A compact heat recovery unit comprising:
- a valve (11) according to any of claims 1 to 5,
- a fixing manifold (4) adapted to be coupled to a gas after-treatment device located on one side of the fixing manifold (4), and on the opposite side said fixing manifold (4) comprises a first seat (4.1) adapted to receive the end of the body of a heat exchanger (5) and a second seat (4.2) to allow for a by-pass conduit (6),
- a heat exchanger (5) comprising a shell (5.1) housing a heat exchange tube bundle (5.2) extending between an inlet (5.3) for the hot gas and an outlet (5.4) for the cooled gas, further comprising an inlet (5.5) and an outlet (5.6) for circulation of the liquid coolant through the interior of the shell (5.1), covering the exchange tube bundle (5.2), wherein one end of the heat exchanger (5) is attached to the first seat (4.1) of the fixing manifold (4), and the opposite end is attached to the third frame (1.3) of the valve chassis (1), such that the tube bundle (5.2) puts the interior of the fixing manifold (4) in fluid communication with the third opening (1.3.1) of the valve chassis (1),
- a by-pass conduit (6) extending from the second seat (4.2) of the fixing manifold (4) to the first frame (1.1) of the valve chassis (1), such that said by-pass conduit (6) puts the interior of the fixing manifold (4) in fluid communication with the first opening (1.1.1) of the valve chassis (1),
- a first exhaust manifold (7) adapted to close the space established between the first frame (1.1) and the second frame (1.2), forming a chamber, and allowing the flap (2) to move in the interior thereof, and comprising an outlet connection (7.1) for fluid communication of the interior of the first exhaust manifold (7) with an exhaust conduit (9),
- a second exhaust manifold (8) adapted to close the space established between the second frame (1.2) and the third frame (1.3), forming a chamber, and comprising an outlet connection (8.1) for fluid communication of the interior of the second exhaust manifold (8) with a gas feed conduit (10) for feeding recirculated gas to the intake.

7. The recovery unit according to claim 6, wherein the by-pass conduit (6) and the heat exchanger (5) are arranged essentially parallel to one another.

8. The recovery unit according to claim 6, wherein the by-pass conduit (6) and the heat exchanger (5) are arranged with an orientation converging towards the valve (11).

9. The recovery unit according to any of claims 6 to 8, wherein the first manifold (7), the second manifold (8) or both (7, 8) are formed from a punched and pressed sheet.

10. The recovery unit according to any of claims 6 to 9, wherein the first manifold (7) and the second manifold (8) are formed as one part.

11. A compact heat recovery unit comprising:
- a valve (11) according to any of claims 1 to 5,
- a first intake manifold (13) adapted to close the space established between the first frame (1.1) and the second frame (1.2), forming a chamber, and allowing the flap (2) to move in the interior thereof, comprising an inlet for the hot gas,
- an exhaust conduit (12) adapted to lead exhaust gas into the atmosphere, attached to the first frame (1.1) and in fluid communication with the chamber formed by the first intake manifold (13),
- a second intake manifold (14) adapted to close the space established between the second frame (1.2) and the third frame (1.3), forming a chamber,
- a heat exchanger (5) comprising a shell (5.1) housing a heat exchange tube bundle (5.2) extending between an inlet (5.3) for the hot gas and an outlet (5.4) for the cooled gas, further comprising an inlet (5.5) and an outlet (5.6) for circulation of the liquid coolant through the interior of the shell (5.1), covering the exchange tube bundle (5.2), wherein one end of the heat exchanger (5) is attached to the third frame (1.3) of the valve chassis (1), and the opposite end is attached to an exhaust manifold (15) which is in turn in fluid communication with the exhaust conduit (12), such that the tube bundle (5.2) puts the chamber formed by the second intake manifold (14) and the exhaust manifold (15) in fluid communication for leading the cooled gas to the exhaust conduit (12).

12. The compact heat recovery unit according to claim 11, wherein the inlet of the first intake manifold (13) comprises a conduit segment (13.1) wherein:
- the conduit segment (13.1) either axially coincides with the exhaust conduit (12),
- or the longitudinal axis of the conduit segment (13.1) and the longitudinal axis of the exhaust conduit (12) are parallel.

13. The compact heat recovery unit according to claim 11 or 12, wherein the exhaust manifold (15) comprises a tubular prolongation (15.1) attached to the wall of the exhaust conduit (12).

14. The compact heat recovery unit according to any of claims 11 to 13, wherein the first frame (1.1) of the valve (11) is oblique with respect to the transverse plane of the exhaust conduit (12).

15. An internal combustion engine comprising a heat recovery unit according to any of claims 6 to 14.
